# EUROPEAN PATENT SPECIFICATION

(11) **EP 4 094 954 B1**
(45) Date of publication and mention of the grant of the patent: **21.02.2024**
(21) Application number: 22175608.3
(22) Date of filing: 26.05.2022
(51) Int. Cl.: B60B 3/00, B60B 3/04, B60B 19/08, B60B 23/00, B60B 23/06, B60B 27/00, B60B 27/02, F16D 65/00, F16D 65/095

(54) **CENTRAL DISC FOR A BRAKE DISC FOR CYCLE OR MOTORCYCLE**
ZENTRALE SCHEIBE FÜR EINE BREMSSCHEIBE FÜR EIN FAHRRAD ODER MOTORRAD
DISQUE CENTRAL POUR UN DISQUE DE FREIN DE CYCLE OU DE MOTOCYCLETTE

(30) Priority: 27.05.2021 IT 202100013853
(43) Date of publication of application: 30.11.2022
(73) Proprietor: Sunstar Engineering Europe GmbH, 86641 Rain (DE)
(72) Inventor: BASSO, Davide, 22066 Mariano Comense (CO) (IT)
(74) Representative: Locatelli, Massimo

(56) References cited:
- GB-A- 2 497 426
- GB-A- 2 515 063
- US-B2- 10 480 601

## Description

The present invention relates to a central disc for a brake disc for cycle or motorcycle.

In the state of the art, a brake disc comprising an outer ring and a central disc of inner support is known. The outer ring forms two flat surfaces parallel to each other which define contact areas with friction means suitable for braking. The outer ring comprises an outer edge and an inner edge from which a multiplicity of protuberances or ribs radially protrude which are adapted to be mounted with the central disc of inner support which is in turn adapted to key centrally on a hub of a rotating means of a cycle or a motorcycle. The central disc comprises a multiplicity of radial grooves arranged radially and adapted to mount the respective multiplicity of protuberances or ribs of the outer ring supporting the outer ring. An example of such a disc is known from the document US 10 480601B2.

Disadvantageously, friction powder resulting from the braking action accumulates in the lower portion of the radial grooves of the central disc.

The object of the present invention is to realize a brake disc that remains clean and that maintains an axial float over time.

In accordance with the invention, this object is achieved with a central disc of inner support of a brake disc for cycle or motorcycle according to claim 1.

Other features are provided in the dependent claims.

The features and advantages of the present invention will be more apparent from the following description, which is to be understood as exemplifying and not limiting, with reference to the appended schematic drawings, in which:

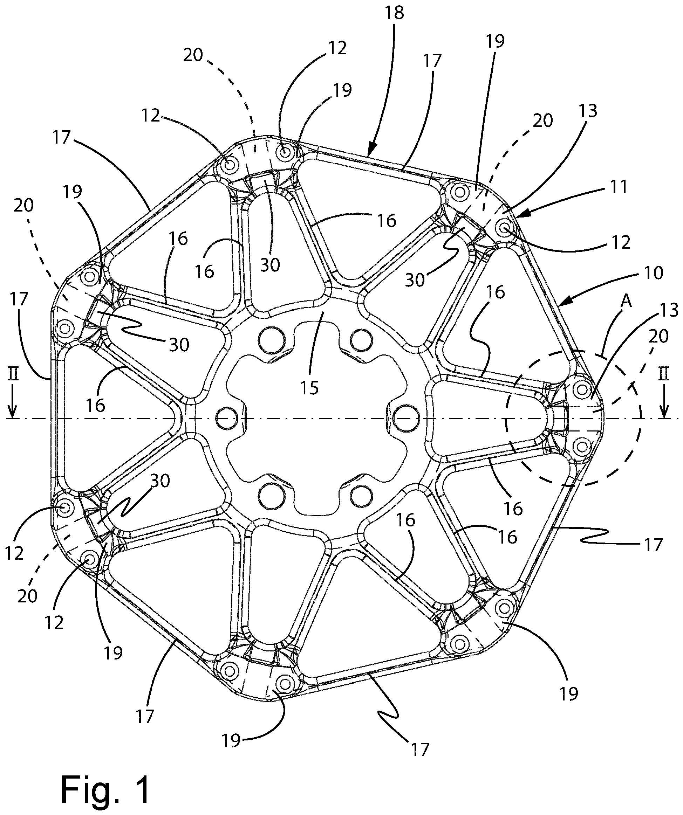

Figure 1 is a front view of a central disc of a brake disc for cycle or for motorcycle according to the present invention;

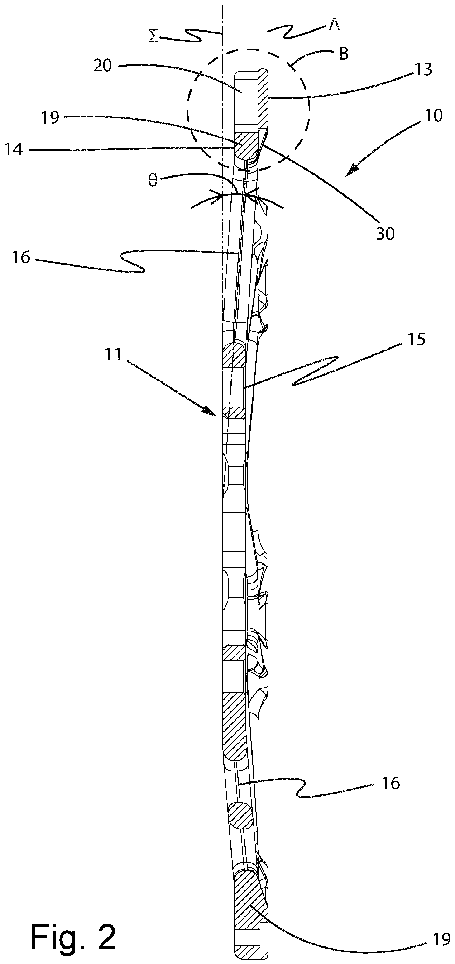

Figure 2 is a sectional view of the central disc according to line II-II of Figure 1;
Figure 3 is an enlarged view of detail A of Figure 1;
Figure 4 is a rear view of detail A of Figure 1;
Figure 5 is a sectional view of detail B of Figure 2 according to line V-V of Figure 4;
Figure 6 is a sectional view according to the line VI-VI of Figure 5.

With reference to the aforementioned figures, a central disc 10 of a brake disc for cycle or motorcycle is shown.

The brake disc also comprises an outer ring which comprises a contact zone with friction means for braking.

The central disc 10 is an inner support for said outer ring of the brake disc.

The central disc 10 structurally supports an axial load resulting from normal use, wherein axle means the axis of rotation of a wheel of the cycle or of the motorcycle.

Radial direction means a direction along the radii of said cycle or motorcycle wheel.

The central disc 10 comprises a multiplicity of first radial grooves 20 adapted to mount a respective multiplicity of protuberances or ribs extending radially from an inner edge of the outer ring of the brake disc towards the central disc 10.

The central disc 10 is configured to key on a wheel hub of the cycle or of the motorcycle.

The central disc 10 comprises a load-bearing body 11 where the multiplicity of first radial grooves 20 are obtained.

The first radial grooves 20 have a shape complementary to that of the protuberances or ribs on the inner edge of the outer ring of the brake disc.

The load-bearing body 11 of the central disc 10 comprises through holes 12 that are adapted to be coupled with sealing elements that once mounted with the load-bearing body 11 retain the protuberances or ribs inside the first radial grooves 20 of the central disc 10 by fixedly mounting the outer ring with the central disc 10.

The load-bearing body 11 of the central disc 10 comprises a front face 13 and a back face 14.

The first radial grooves 20 are obtained by carving the back face 14 of the load-bearing body 11 of the central disc 10.

The load-bearing body 11 of the central disc 10 also comprises a multiplicity of second radial grooves 30 which are carved in the front face 13 of the load-bearing body 11.

The second radial grooves 30 are arranged only in correspondence with each first radial groove 20.

Each first radial groove 20 is in communication of friction powder flow resulting from the braking action with a corresponding second radial groove 30 by means of a through slot 40 which is arranged between the first groove 20 and the corresponding second radial groove 30.

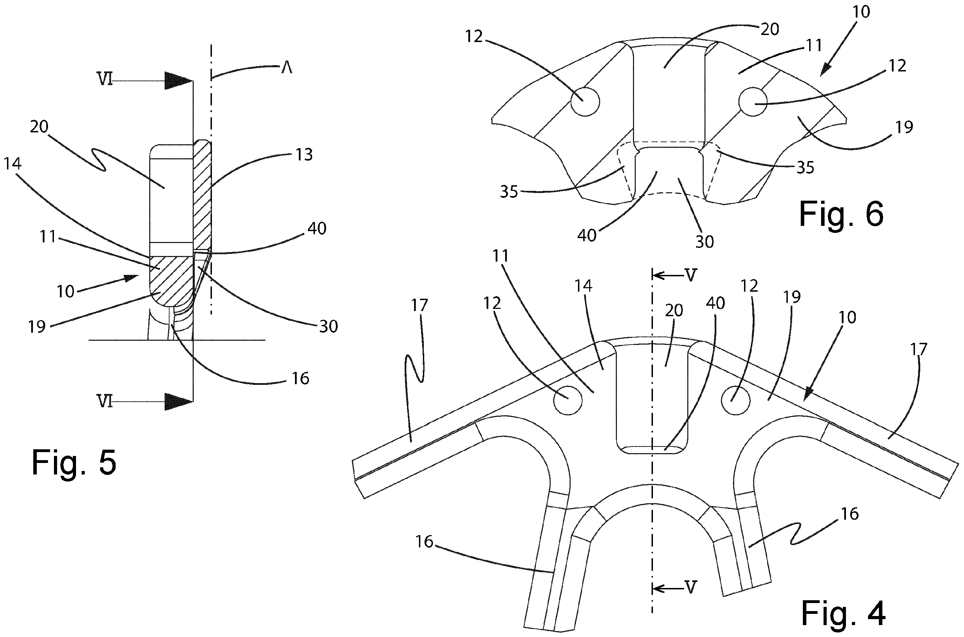

As shown in particular in Figure 5, the through slot 40 is carved in the load-bearing body 11 between the first radial groove 20 and the second radial groove 30.

Each radial slot 40 of the multiplicity of radial slots 40 puts in communication of friction powder flow resulting from the braking action the first 20 and the second corresponding radial slot 30 so that the powder can fall downwards by gravity passing through the through slot 40 and out of the second radial slot 30.

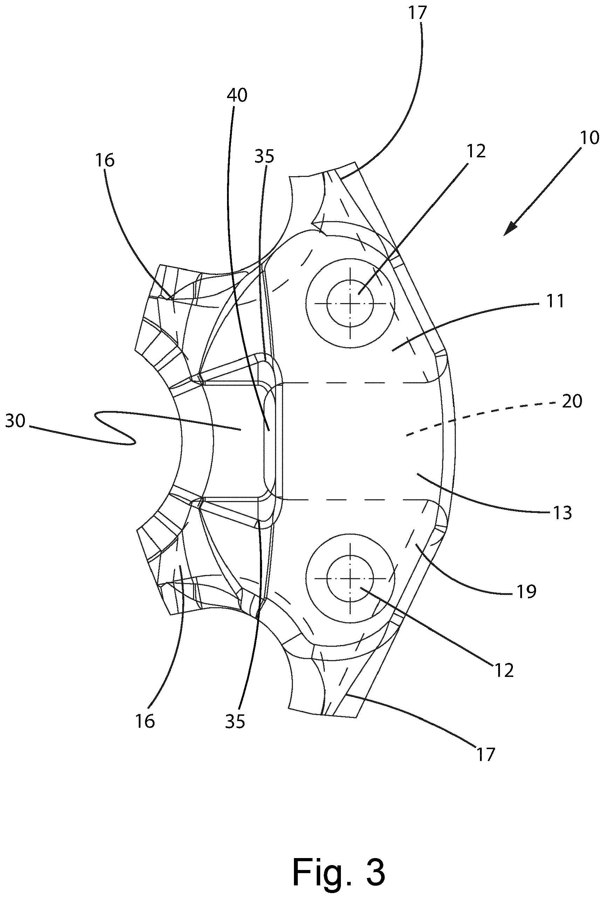

More preferably as shown in particular in Figure 3 the second radial groove 30 comprises an enlarged front portion 35 which increases a width of the second radial groove 30 so as to allow an easier passage of the braking powder. Width of the second groove 30 means a dimension along a direction of rotation of the central disc (10) both in a clockwise and in a counterclockwise direction.

The enlarged front portion 35 increases the width of the second radial groove 30 in the axial direction by increasing the width towards the front portion, starting from an initial width from the bottom of the second radial groove 30 until reaching a greater final width of the second radial groove 30 in correspondence with the outer surface of the front face 13, so as to allow an even easier passage of the braking powder.

Moreover, even more preferably, the enlarged front portion 35 enlarges the width of the second groove 30 only in correspondence with the through slot 40 along the direction of rotation of the central disc 10 in both clockwise and anticlockwise direction so as to allow an even easier passage of the braking powder.

Even more preferably, as shown in the figures, the load-bearing body 11 of the central disc 10 comprises an inner portion 15 and an outer portion 18.

The inner portion 15 of the load-bearing body 11 of the central disc 10 is adapted to key on the wheel hub of the cycle or of the motorcycle.

The outer portion 18 of the load-bearing body 11 of the central disc 10 comprises a multiplicity of outer bodies 19 wherein the first 20 and the second radial grooves 30 are carved.

The first radial grooves 20 are carved in the back face 14 of the outer body 19, while the second radial grooves 30 are carved in the front face 13 of the outer body 19.

Each outer body 19 comprises a pair of through holes 12.

The load-bearing body 11 comprises a multiplicity of radial rods 16 extending radially from the inner disc 15.

The radial rods 16 support the multiplicity of outer bodies 19.

The load-bearing body 11 comprises a multiplicity of separation rods 17 which are arranged between one outer body 19 and another one.

The inner portion 15 comprises a back face arranged in a first geometric plane Σ.

The front face 13 of the outer body 19 lies on a second geometric plane Λ parallel to said first geometric plane Σ.

The radial rods 16 extend from the inner portion 15 and tilt towards the front by an angle θ comprised between 0 and 40 degrees so that the first geometric plane Σ and the second geometric plane Λ are not coplanar.

The tilt of the angle θ makes it advantageous to discharge by gravity the accumulation of friction powder resulting from the braking action so that it does not soil the brake disc, but falls towards the outside of the cycle or of the motorcycle.

As shown in the figures, the through slot 40 is carved in the outer body 19 between the first radial groove 20 and the second radial groove 30.

More generally, it is possible to envisage that the front face 13 of the load-bearing body 11 where the second radial groove 30 is carved lies on the second geometric plane Λ which is parallel to the first geometric plane Σ on which the back face of the inner portion 15 of the central disc 10 lies, wherein the second geometric plane Λ is separated by an axial space from the first geometric plane Σ so that the second geometric plane Λ is outermost towards the front portion along the axial direction with respect to the first geometric plane Σ. In this way the accumulation of friction powder resulting from the braking action is discharged by gravity towards the outside of the cycle or of the motorcycle so that it does not soil the brake disc or any other component of the cycle or of the motorcycle.

Alternatively, a pressure blower can be used to remove residual braking powder.

Alternatively, it can be envisaged that the central disc 10 may not have the rods 16, but that the shape of the central disc 10 is made so that the back face of the central portion 15 lies on the first geometric plane Σ and the outer portion 18 of the load-bearing body 11 where the radial grooves 20, 30 are carved comprises a front face 13 lying on the second geometric plane Λ shifted axially towards the front portion.

Advantageously, the central disc 10 according to the present invention makes it possible to realize a brake disc that remains clean and that maintains an axial float over time.

## Claims

1. Central disc (10) of a brake disc for cycle or motorcycle,
wherein said central disc (10) is configured to key on a wheel hub of the cycle or of the motorcycle,
wherein said central disc (10) supports an outer ring of the brake disc, wherein said outer ring comprises a contact zone with friction means for braking,
wherein said central disc (10) comprises a load-bearing body (11) comprising a multiplicity of first radial grooves (20) adapted to mount a multiplicity of protuberances or ribs extending radially from an inner edge of said outer ring of the brake disc towards said central disc (10),
**characterized in that** said load-bearing body (11) comprises a multiplicity of second radial grooves (30), wherein each second radial groove (30) is arranged in correspondence with each first radial groove (20) of said multiplicity of first radial grooves (20),
wherein each second radial groove (30) is in communication of friction powder flow resulting from the braking action with each first radial groove (20) of said multiplicity of first radial grooves (20) through a through slot (40) carved inside the load-bearing body (11) between said first (20) and said second radial groove (30).

2. Central disc (1) according to the claim 1, **characterized in that** said load-bearing body (11) of the central disc (10) comprises a front face (13) and a back face (14),
wherein the first radial grooves (20) are obtained by carving the back face (14) of the load-bearing body (11) of the central disc (10),
wherein the second radial grooves (30) are obtained by carving the front face (13) of the load-bearing body (11) of the central disc (10).

3. Central disc (10) according to anyone of the claims 1 or 2, **characterized in that** the second radial groove (30) comprises an enlarged front portion (35) which increases a width of the second radial groove (30),
wherein the width of the second groove (30) means a dimension along a direction of rotation of the central disc (10) both in a clockwise and in a counterclockwise direction.

4. Central disc (10) according to the claim 3, **characterized in that** the enlarged front portion (35) increases the width of the second radial groove (30) in the axial direction by increasing the width towards the front portion.

5. Central disc (10) according to anyone of the claims 3 or 4, **characterized in that** the enlarged front portion (35) increases the width of the second groove (30) only in correspondence with the through slot (40) along the direction of rotation of the central disc (10) both in a clockwise and in a counterclockwise direction.

6. Central disc (10) according to anyone of the claims 1-5, **characterized in that** the load-bearing body (11) of the central disc 10 comprises an outer portion (18) comprising a multiplicity of outer bodies (19) wherein the first (20) and the second radial groves are carved (30).

7. Central disc (10) according to anyone of the claims 2-6, **characterized in**
**that** the load-bearing body (11) of the central disc 10 comprises an inner portion (15) which comprises a back face lying on a first geometric plane (Σ),
**that** the front face (13) of the load-bearing body (11) wherein the second radial groove (30) is carved lying on a second geometric plane (A) which is parallel to the first geometric plane (Σ),
wherein the second geometric plane (Λ) is separated by an axial space from the first geometric plane (Σ) so that the second geometric plane (Λ) is outermost towards the front portion along the axial direction with respect to the first geometric plane (Σ).

8. Central disc (10) according to the claim 7, **characterized in that** the load-bearing body (11) comprises a multiplicity of radial rods (16) which protrude radially from the inner disc (15) and tilt towards the front by an angle (θ) comprised between 0 and 40 degree with respect to the first geometric plane (Σ), so that the first geometric plane (Σ) and the second geometric plane (Λ) are not coplanar.

9. Central disc (10) according to anyone of the claims 6-8, **characterized in that** the load-bearing body (11) comprises a multiplicity of separation rods (17) which are arranged between one outer body (19) and another one.

## Patentansprüche

1. Zentrale Scheibe (10) einer Bremsscheibe für ein Fahrrad oder Motorrad,
wobei die zentrale Scheibe (10) so konfiguriert ist, dass sie auf eine Radnabe des Fahrrads oder des Motorrads passt,
wobei die zentrale Scheibe (10) einen äußeren Ring der Bremsscheibe trägt, wobei der äußere Ring eine Kontaktzone mit Reibungsmitteln zum Bremsen umfasst,
wobei die zentrale Scheibe (10) einen lasttragenden Körper (11) umfasst, der eine Vielzahl von ersten radialen Nuten (20) umfasst, die geeignet sind, eine Vielzahl von Vorsprüngen oder Rippen zu montieren, die sich radial von einer inneren Kante des äußeren Rings der Bremsscheibe in Richtung der zentralen Scheibe (10) erstrecken, **dadurch gekennzeichnet, dass** der lasttragende Körper (11) eine Vielzahl von zweiten radialen Nuten (30) umfasst, wobei jede zweite radiale Nut (30) in Übereinstimmung mit jeder ersten radialen Nut (20) der Vielzahl von ersten radialen Nuten (20) angeordnet ist,
wobei jede zweite radiale Nut (30) mit jeder ersten radialen Nut (20) der Vielzahl von ersten radialen Nuten (20) durch einen Durchgangsschlitz (40), der in den lasttragenden Körper (11) zwischen der ersten (20) und der zweiten radialen Nut (30) eingearbeitet ist, in Verbindung mit dem aus der Bremswirkung resultierenden Reibpulverfluss steht.

2. Zentrale Scheibe (1) nach Anspruch 1, **dadurch gekennzeichnet, dass** der lasttragende Körper (11) der zentralen Scheibe (10) eine Vorderseite (13) und eine Rückseite (14) aufweist,
wobei die ersten radialen Nuten (20) durch Einschneiden der Rückseite (14) des lasttragenden Körpers (11) der zentralen Scheibe (10) erhalten werden,
wobei die zweiten radialen Nuten (30) durch Einschneiden der Vorderseite (13) des lasttragenden Körpers (11) der zentralen Scheibe (10) erhalten werden.

3. Zentrale Scheibe (10) nach einem der Ansprüche 1 oder 2, **dadurch gekennzeichnet, dass** die zweite radiale Nut (30) einen vergrößerten vorderen Abschnitt (35) umfasst, der die Breite der zweiten radialen Nut (30) erhöht,
wobei die Breite der zweiten Nut (30) eine Abmessung entlang einer Drehrichtung der zentralen Scheibe (10) sowohl im Uhrzeigersinn als auch im Gegenuhrzeigersinn bedeutet.

4. Zentrale Scheibe (10) nach Anspruch 3, **dadurch gekennzeichnet, dass** der vergrößerte vordere Abschnitt (35) die Breite der zweiten radialen Nut (30) in axialer Richtung vergrößert, indem die Breite in Richtung des vorderen Abschnitts zunimmt.

5. Zentrale Scheibe (10) nach einem der Ansprüche 3 oder 4, **dadurch gekennzeichnet, dass** der vergrößerte vordere Abschnitt (35) die Breite der zweiten Nut (30) nur in Übereinstimmung mit dem durchgehenden Schlitz (40) entlang der Drehrichtung der zentralen Scheibe (10) sowohl im Uhrzeigersinn als auch im Gegenuhrzeigersinn vergrößert.

6. Zentrale Scheibe (10) nach einem der Ansprüche 1 bis 5, **dadurch gekennzeichnet, dass** der lasttragende Körper (11) der zentralen Scheibe (10) einen äußeren Abschnitt (18) umfasst, der eine Vielzahl von äußeren Körpern (19) umfasst, in die die erste (20) und die zweite radiale Nut eingearbeitet sind (30).

7. Zentrale Scheibe (10) nach einem der Ansprüche 2 bis 6, **dadurch gekennzeichnet,**
**dass** der lasttragende Körper (11) der zentralen Scheibe (10) einen inneren Abschnitt (15) umfasst, der eine Rückseite umfasst, die auf einer ersten geometrischen Ebene (Σ) liegt,
**dass** die Vorderseite (13) des lasttragenden Körpers (11), in die die zweite radiale Nut (30) eingearbeitet ist, auf einer zweiten geometrischen Ebene (Λ) liegt, die parallel zur ersten geometrischen Ebene (Σ) ist,
wobei die zweite geometrische Ebene (Λ) durch einen axialen Abstand von der ersten geometrischen Ebene (Σ) getrennt ist, so dass die zweite geometrische Ebene (Λ) in Bezug auf die erste geometrische Ebene (Σ) entlang der axialen Richtung in Richtung des vorderen Abschnitts am weitesten außen liegt.

8. Zentrale Scheibe (10) nach Anspruch 7, **dadurch gekennzeichnet, dass** der lasttragende Körper (11) eine Vielzahl von radialen Stäben (16) umfasst, die radial von der inneren Scheibe (15) vorstehen und sich um einen Winkel (θ) zwischen 0 und 40 Grad in Bezug auf die erste geometrische Ebene (Σ) nach vorne neigen, so dass die erste geometrische Ebene (Σ) und die zweite geometrische Ebene (Λ) nicht koplanar sind.

9. Zentrale Scheibe (10) nach einem der Ansprüche 6 bis 8, **dadurch gekennzeichnet, dass** der lasttragende Körper (11) eine Vielzahl von Trennstäben (17) umfasst, die zwischen einem äußeren Körper (19) und einem anderen angeordnet sind.

## Revendications

1. Disque central (10) d'un disque de frein pour vélo ou moto,
dans lequel ledit disque central (10) est configuré pour s'enclencher sur un moyeu de roue du vélo ou de la moto,
dans lequel ledit disque central (10) supporte une bague extérieure du disque de frein, dans lequel ladite bague extérieure comprend une zone de contact avec les moyens de friction pour le freinage,
dans lequel ledit disque central (10) comprend un corps porteur (11) comprenant une multiplicité de premières rainures radiales (20) adaptées pour monter une multiplicité de protubérances ou de nervures s'étendant radialement à partir d'un bord intérieur de ladite bague extérieure du disque de frein vers ledit disque central (10),
**caractérisé en ce que** ledit corps porteur (11) comprend une multiplicité de secondes rainures radiales (30), dans lesquelles chaque seconde rainure radiale (30) est disposée en correspondance avec chaque première rainure radiale (20) de ladite multiplicité de premières rainures radiales (20),
dans lequel chaque seconde rainure radiale (30) est en communication avec le flux de poudre de friction résultant de l'action de freinage avec chaque première rainure radiale (20) de ladite multiplicité de premières rainures radiales (20) à travers une fente traversante (40) creusée à l'intérieur du corps porteur (11) entre ladite première (20) et ladite seconde rainure radiale (30).

2. Disque central (1) selon la revendication 1, **caractérisé en ce que** ledit corps porteur (11) du disque central (10) comprend une face avant (13) et une face arrière (14),
dans lequel les premières rainures radiales (20) sont obtenues en sculptant la face arrière (14) du corps porteur (11) du disque central (10),
dans lequel les secondes rainures radiales (30) sont obtenues en sculptant la face avant (13) du corps porteur (11) du disque central (10).

3. Disque central (10) selon l'une quelconque des revendications 1 ou 2, **caractérisé en ce que** la seconde rainure radiale (30) comprend une partie avant élargie (35) qui augmente la largeur de la seconde rainure radiale (30),
dans lequel la largeur de la seconde rainure (30) correspond à une dimension le long du sens de rotation du disque central (10) dans le sens des aiguilles d'une montre et dans le sens inverse des aiguilles d'une montre.

4. Disque central (10) selon la revendication 3, **caractérisé en ce que** la partie avant élargie (35) augmente la largeur de la seconde rainure radiale (30) dans la direction axiale en augmentant la largeur vers la partie avant.

5. Disque central (10) selon l'une quelconque des revendications 3 ou 4, **caractérisé en ce que** la partie avant élargie (35) augmente la largeur de la seconde rainure (30) uniquement en correspondance avec la fente traversante (40) le long de la direction de rotation du disque central (10) à la fois dans le sens des aiguilles d'une montre et dans le sens inverse des aiguilles d'une montre.

6. Disque central (10) selon l'une quelconque des revendications 1 à 5, **caractérisé en ce que** le corps porteur (11) du disque central 10 comprend une partie extérieure (18) comprenant une multiplicité de corps extérieurs (19) dans lequel la première (20) et la seconde rainure radiale sont creusées (30).

7. Disque central (10) selon l'une quelconque des revendications 2 à 6, **caractérisé en ce**
**que** le corps porteur (11) du disque central 10 comprend une partie intérieure (15) qui comprend une face arrière située sur un premier plan géométrique (Σ),
**que** la face avant (13) du corps porteur (11) dans lequel la seconde rainure radiale (30) est creusée se trouve sur un second plan géométrique (Λ) qui est parallèle au premier plan géométrique (Σ),
dans lequel le second plan géométrique (Λ) est séparé du premier plan géométrique (Σ) par un espace axial, de sorte que le second plan géométrique (Λ) est le plus extérieur vers la partie avant le long de la direction axiale par rapport au premier plan géométrique (Σ).

8. Disque central (10) selon la revendication 7, **caractérisé en ce que** le corps porteur (11) comprend une multiplicité de tiges radiales (16) qui font saillie radialement à partir du disque intérieur (15) et s'inclinent vers l'avant d'un angle (θ) compris entre 0 et 40 degrés par rapport au premier plan géométrique (Σ), de sorte que le premier plan géométrique (Σ) et le second plan géométrique (Λ) ne sont pas coplanaires.

9. Disque central (10) selon l'une quelconque des revendications 6 à 8, **caractérisé en ce que** le corps porteur (11) comprend une multiplicité de tiges de séparation (17) qui sont disposées entre un corps extérieur (19) et un autre.
